# EUROPEAN PATENT APPLICATION

(11) **EP 4 580 199 A1**
(43) Date of publication of application: **02.07.2025**
(21) Application number: 24755989.1
(22) Date of filing: 31.01.2024
(51) Int. Cl.: H04N 23/50, H04N 23/68, H04N 23/67

(54) **CAMERA MODULE AND ELECTRONIC DEVICE**

(30) Priority: 13.02.2023 CN 202310146314
(71) Applicant: Huawei Technologies Co., Ltd., Shenzhen, Guangdong 518129 (CN)
(72) Inventor: WU, Yushun, Shenzhen, Guangdong 518129 (CN); JIANG, Hong, Shenzhen, Guangdong 518129 (CN)
(74) Representative: Thun, Clemens
(86) International application number: PCT/CN2024/074874
(87) International publication number: WO 2024/169615

(57) **Abstract**

This application relates to a camera module and an electronic device. The camera module includes an image stabilization mechanism. Along a thickness direction of the image stabilization mechanism, the image stabilization mechanism includes a first movable frame, a second movable frame, and a third fixed frame that are sequentially connected. The first movable frame is configured to mount a lens assembly, one of the first movable frame and the second movable frame is provided with a first sliding groove part, the other one of the first movable frame and the second movable frame is provided with a first sliding part, the first sliding part is capable of sliding along the first sliding groove part, and the first sliding groove part extends along a first direction. One of the second movable frame and the third fixed frame is provided with a second sliding groove part, the other one of the second movable frame and the third fixed frame is provided with a second sliding part, the second sliding part is capable of sliding along the second sliding groove part, and the second sliding groove part extends along a second direction. The structure has advantages of a simple structure and low manufacturing costs and double-layer degree-of-freedom decoupling, motion crosstalk and a tilt angle of movement can be reduced, and support and limit are more reliable, so that photographing and video requirements of the electronic device during a shake can be met, and user experience can be improved.

## Description

This application claims priority to Chinese Patent Application 202310146314.1, filed with the China National Intellectual Property Administration on February 13, 2023 and entitled "CAMERA MODULE AND ELECTRONIC DEVICE", which is incorporated herein by reference in its entirety.

### TECHNICAL FIELD

This application relates to the field of electronic device technologies, and in particular, to a camera module and an electronic device.

### BACKGROUND

With rapid development of electronic device technologies, electronic devices including camera modules are widely used. For example, apparatuses such as mobile phones and tablet computers are particularly favored and widely used by consumers. To avoid poor imaging effect caused by shaking of the electronic device with the camera module in a photographing process, the electronic device usually includes an optical image stabilization (Optical Image Stabilization, OIS) mechanism. However, in an OIS mechanism of a camera module in a conventional technology, wire suspension stabilization or ball bearing stabilization is usually used. To be specific, a movable part of the OIS is supported through a suspension wire or a ball, but support reliability of the suspension wire or the ball is poor, which is prone to reduction in image stabilization performance. Consequently, increasingly high photographing and video requirements of the customer in a moving state cannot be met.

### SUMMARY

This application provides a camera module and an electronic device, to resolve a problem of poor support reliability of an image stabilization mechanism in a camera module in the conventional technology.

According to a first aspect, an embodiment of this application provides a camera module, including an image stabilization mechanism. Along a thickness direction of the image stabilization mechanism, the image stabilization mechanism includes a first movable frame, a second movable frame, and a third fixed frame that are sequentially connected. The first movable frame is configured to mount a lens assembly, one of the first movable frame and the second movable frame is provided with a first sliding groove part, the other one of the first movable frame and the second movable frame is provided with a first sliding part, the first sliding part is capable of sliding along the first sliding groove part, and the first sliding groove part extends along a first direction. One of the second movable frame and the third fixed frame is provided with a second sliding groove part, the other one of the second movable frame and the third fixed frame is provided with a second sliding part, the second sliding part is capable of sliding along the second sliding groove part, and the second sliding groove part extends along a second direction.

In this solution, the first movable frame of the image stabilization mechanism in the camera module can generate a motion along the first direction relative to the second movable frame, and the second movable frame can generate a motion along the second direction relative to the third fixed frame, which has double-layer degree-of-freedom decoupling. In this way, motion crosstalk between the first movable frame and the second movable frame is smaller, a tilt angle of movement is reduced, motion accuracy of the first movable frame and the second movable frame can be improved, and image stabilization effect can be improved. The second movable frame and the third fixed frame slide in a fitting manner through the second sliding part and the second sliding groove part, and the first movable frame and the second movable frame slide in a fitting manner through the first sliding part and the first sliding groove part. This manner has advantages of a simple structure and low manufacturing costs, and has small motion resistance, a faster corresponding speed, and better motion stability. In addition, in this fitting manner, support and limit among the first movable frame, the second movable frame, and the third fixed frame are more reliable, which are unlikely to sag in the thickness direction. Stress on the first sliding groove part and the second sliding groove part is more uniform, support reliability among the first movable frame, the second movable frame, and a third movable frame is improved, a reduction in image stabilization effect is avoided, and therefore image stabilization reliability of the image stabilization mechanism is improved. Moreover, in this fitting manner, the first sliding groove part and the second sliding groove part can further have larger stroke space, and therefore, the first movable frame and the second movable frame can have a longer movement stroke, so that an image stabilization angle of the image stabilization mechanism is improved, photographing and video requirements of an electronic device during a more violent shake can be met, and user experience is improved.

In a possible design, the first sliding groove part includes a first positioning groove, and the first positioning groove is configured to fit with the first sliding part to limit sliding of the first sliding part along the second direction. The second sliding groove part includes a second positioning groove, and the second positioning groove is configured to fit with the second sliding part to limit sliding of the second sliding part along the first direction.

In this solution, the first positioning groove fits with the first sliding part, so that the first sliding part can be prevented from sliding in the first positioning groove along the second direction, and therefore the first movable frame is prevented from generating displacement in the second direction relative to the second movable frame. The second positioning groove fits with the second sliding part, so that the second sliding part can be prevented from sliding in the second positioning groove along the first direction, and therefore the second movable frame is prevented from generating displacement in the first direction relative to the third fixed frame. In this way, the first movable frame can generate only displacement in the first direction relative to the second movable frame, and the second movable frame can generate only displacement in the second direction relative to the third fixed frame, so that motion crosstalk is avoided, a tilt angle of movement is reduced, displacement accuracy of the first movable frame and the second movable frame is improved, and the image stabilization effect of the camera module is improved.

In a possible design, the first positioning groove and the second positioning groove are V-shaped grooves or trapezoidal grooves.

In this solution, openings of the V-shaped groove and the trapezoidal groove gradually increase along the thickness direction. When the first sliding part and the second sliding part are supported with the V-shaped groove or the trapezoidal groove in a fitting manner along a direction, the first sliding part and the second sliding part may be located at a position where the opening of the V-shaped groove or the trapezoidal groove is relatively small. In this way, displacement of the first sliding part and the second sliding part along a non-extension direction of the V-shaped groove or the trapezoidal groove can be limited, preventing the first movable frame from generating displacement in a non-preset direction relative to the second movable frame and preventing the second movable frame from generating displacement in a non-preset direction relative to the third fixed frame, so that the first sliding part 121 and the second sliding part 131 can be accurately positioned. In addition, structures of the V-shaped groove and the trapezoidal groove are simple, which facilitates mass production, processing, and manufacturing, so that mechanism complexity of the camera module can be further reduced, and manufacturing costs can be reduced.

In a possible design, the first sliding groove part further includes a first sliding groove, and the second sliding groove part further includes a second sliding groove. Along the second direction, a width of the first sliding groove is greater than a width of the first sliding part. Along the first direction, a width of the second sliding groove is greater than a width of the second sliding part.

In this solution, when the first movable frame, the second movable frame, and the third fixed frame are supported and in contact with each other in a fitting manner along the thickness direction, in the structure disposition, a fault tolerance rate of the first sliding groove part and the second sliding groove part can be increased, a difficulty of fitting the first sliding groove part with the first sliding part and a difficulty of fitting the second sliding groove part with the second sliding part are reduced, a qualification rate of the camera module is improved, and a manufacturing difficulty and costs are reduced.

In a possible design, the first sliding groove and the second sliding groove are square grooves or U-shaped grooves.

In this solution, opening sizes of the square groove and the U-shaped groove in the thickness direction are the same. When the first movable frame, the second movable frame, and the third fixed frame are supported and in contact with each other in a fitting manner along the thickness direction, the square groove or the U-shaped groove and the first sliding part and the second sliding part may implement functions of supporting and limiting only in the thickness direction, but do not perform the limiting function in a non-preset moving direction. In this way, it is ensured that the first sliding part and the second sliding part can move smoothly along a preset moving direction, and fault tolerance rates of the first sliding groove part and the second sliding groove part are increased.

In a possible design, the first sliding part and the second sliding part are of semi-cylindrical structures or hemispherical structures.

In this solution, when the first sliding part and the second sliding part are of semi-cylindrical structures or hemispherical structures, contact areas with the first sliding groove part and the second sliding groove part can be reduced, so that a damping force is reduced, which make it easier to be driven. Therefore, a faster response speed is obtained, and image stabilization efficiency of the camera module is improved. In addition, a tail end of the semi-cylindrical structure or the hemispherical structure is a smooth curved surface, so that a recess is not easily generated due to stress concentration when the first sliding groove part and the second sliding groove part are in contact. Therefore, the first sliding groove part and the second sliding groove part have better bearing capacity, falling reliability of a camera assembly is improved, and a service life of the camera assembly is prolonged.

In a possible design, the first movable frame, the second movable frame, and the third fixed frame are all of integrated injection-molded structures.

In this solution, when the first movable frame, the second movable frame, and the third fixed frame are all of the integrated injection-molded structures, that is, another component is not required for the first movable frame, the second movable frame, and the third fixed frame for support, constituent components of the camera module can be further reduced, the manufacturing costs are further reduced, and manufacturing efficiency is improved.

In a possible design, the first movable frame further includes a first body, the second movable frame further includes a second body, and the third fixed frame further includes a third body. The first sliding part is detachably connected to the first body or the second body. The second sliding part is detachably connected to the second body or the third body.

In this solution, the structure can further improve fit tolerance of the first movable frame, the second movable frame, and the third fixed frame, and positions of the first sliding part and the second sliding part may be adjusted based on an actual structure in a preparation process, so that the first movable frame, the second movable frame, and the third fixed frame can effectively support and connect to each other in a fitting manner, to improve the manufacturing efficiency of the camera module. Moreover, the first sliding part and the second sliding part can be replaced when the first sliding part and the second sliding part are severely worn out, to reduce subsequent maintenance costs. In addition, in the structure disposition, materials of the first sliding part and the second sliding part can be other materials different from those of the first movable frame, the second movable frame, and the third fixed frame, to improve abrasive resistance of the first sliding part and the second sliding part, and prolong service lives of the first sliding part and the second sliding part.

In a possible design, a lubricating material is disposed inside the first sliding groove part and the second sliding groove part. The lubricating material is lubricating grease or lubricating oil.

In this solution, the lubricating material is added to the first sliding groove part and the second sliding groove part, so that sliding friction between the first sliding part and the first sliding groove part and between the second sliding part and the second sliding groove part can be further reduced. Therefore, a response speed is improved, power consumption can also be reduced, and control precision of the first movable frame and the second movable frame is improved.

In a possible design, the camera module further includes a magnet, the image stabilization mechanism further includes an image stabilization coil, and the image stabilization coil is configured to drive the magnet to move along the first direction or the second direction. The magnet is fastened to the first movable frame, the image stabilization coil is fastened to the third fixed frame, and the image stabilization coil and the magnet are disposed in correspondence.

In this solution, when the image stabilization mechanism of the camera module operates, the coil can be powered on to generate a magnetic flux, to control the magnet to move, so that the magnet can drive the first movable frame to generate corresponding displacement. Therefore, the structure can provide a driving force for the image stabilization mechanism, so that the first movable frame and the second movable frame of the image stabilization mechanism can slide based on a shaking direction and a displacement amount of the lens assembly, to compensate for the shaking direction and the displacement amount of the lens assembly and therefore implement an image stabilization function.

In a possible design, the image stabilization mechanism further includes a magnetic sheet, and the magnetic sheet is fastened to a side that is of the third fixed frame and that is away from the second movable frame. The magnetic sheet and the magnet are capable of attracting each other, to press the third fixed frame to the first movable frame.

In this solution, the magnetic sheet and the magnet are capable of attracting each other, so that the third fixed frame is pressed to the first movable frame, so that the first movable frame, the second movable frame, and the third fixed frame are more closely in contact with and fit with each other in the thickness direction, the structure is more stable and is difficult to separate. Therefore, structural stability of the camera module is improved.

In a possible design, the image stabilization mechanism further includes a position detection sensor, and the position detection is disposed on the third fixed frame, and is configured to detect a magnetic field change of the magnet, to feed back positions of the first movable frame and the second movable frame. The position detection sensor is a Hall element or a tunnel magnetoresistance sensor.

In this solution, the position detection sensor can detect a magnetic field, and determine a moving position of the magnet by detecting the magnetic field change of the magnet, to determine moving positions of the first movable frame and the second movable frame, and feed back real-time position changes of the first movable frame and the second movable frame, so that the camera module can control a current magnitude of the coil based on the real-time position changes of the first movable frame and the second movable frame. In this way, close-loop control of the positions of the first movable frame and the second movable frame is performed by driving the magnet, and the control precision of the first movable frame and the second movable frame is further improved.

In a possible design, the camera module further includes an autofocus mechanism, and the autofocus mechanism is configured to implement autofocus of the camera module. The autofocus mechanism is disposed on a side that is of the first movable frame and that is away from the second movable frame.

In this solution, the autofocus mechanism is disposed, so that the camera module can implement autofocus while implementing image stabilization. Therefore, photographing effect of the electronic device in a plurality of motion modes is ensured, and user experience is improved.

In a possible design, the autofocus mechanism includes a focus coil, and the focus coil is disposed on an inner side of the magnet. The focus coil is an integrated annular coil or is formed by combining a plurality of coils.

In this solution, when the autofocus mechanism operates, the focus coil is powered on to generate a magnetic flux, which acts with the magnet, to drive the autofocus mechanism to implement an autofocus function. In addition, based on a specific structure and a usage scenario of the camera module, as shown in the figure and the figure, the magnet, the focus coil, and the image stabilization coil may be in different layouts.

According to a second aspect, this application provides an electronic device, including a housing and the camera module in any one of the foregoing embodiments. The camera module is mounted in the housing. Because the camera module has the foregoing technical effect, the electronic device including the camera module also has corresponding technical effect. Details are not described herein again.

It should be understood that the foregoing general descriptions and the following detailed descriptions are merely used as examples, and should not limit this application.

### BRIEF DESCRIPTION OF DRAWINGS

FIG. 1 is a diagram of a structure of a camera module according to this application;
FIG. 2 is a partial exploded view of the camera module in FIG. 1;
FIG. 3 is a diagram of a structure of an image stabilization mechanism in FIG. 2;
FIG. 4 is a sectional view of the image stabilization mechanism in FIG. 3;
FIG. 5 is a diagram of a partial structure of an image stabilization mechanism in FIG. 2;
FIG. 6 is a diagram of the partial structure of the image stabilization mechanism in FIG. 5 from another angle;
FIG. 7 is a diagram of fitting between a first movable frame and a second movable frame in FIG. 3;
FIG. 8 is a diagram of fitting between a first movable frame and a third fixed frame in FIG. 3;
FIG. 9 is a partially enlarged view at an A position in FIG. 4;
FIG. 10 is a partially enlarged view at a B position in FIG. 4;
FIG. 11 is a diagram of a structure of a third fixed frame in FIG. 3 according to another embodiment;
FIG. 12 is a diagram of a structure of a second movable frame in FIG. 3 according to another embodiment;
FIG. 13 is a diagram of a partial structure of the image stabilization mechanism in FIG. 3;
FIG. 14 is a diagram of the partial structure of the image stabilization mechanism in FIG. 13 from another angle;
FIG. 15 is a diagram of a partial structure of the image stabilization mechanism in FIG. 3;
FIG. 16 is a diagram of structures of a magnet and a coil of the camera module in FIG. 1; and
FIG. 17 is a diagram of structures of a magnet and a coil of the camera module in FIG. 1 according to another embodiment.

### Reference numerals:

10: camera module;
1: image stabilization mechanism;
   11: first movable frame;
      111: first sliding groove part;
         111a: first positioning groove;
         111b: first sliding groove;
      112: first body;
   12: second movable frame;
      121: first sliding part;
      122: second sliding groove part;
         122a: second positioning groove;
         122b: second sliding groove;
      123: second body;
      124: clamping part;
   13: third fixed frame;
      131: second sliding part;
      132: third body;
      133: protrusion;
   14: image stabilization coil;
   15: position detection sensor;
   16: magnetic sheet;
   17: debouncing circuit board assembly;
2: magnet;
3: autofocus mechanism;
   31: focus coil;
   32: lens bracket;
   33: focusing circuit board assembly;
4: housing;
X: first direction;
Y: second direction;
Z: thickness direction.

The accompanying drawings herein are incorporated into this specification and constitute a part of this specification, show embodiments conforming to this application, and are used, together with this specification, to explain the principle of this application.

### DESCRIPTION OF EMBODIMENTS

To better understand technical solutions of this application, the following describes embodiments of this application in detail with reference to the accompanying drawings.

In a specific embodiment, the following further describes this application in detail with reference to specific embodiments and the accompanying drawings.

To avoid poor imaging effect caused by shaking of an electronic device with a camera module in a photographing process, the electronic device usually includes an optical image stabilization (Optical Image Stabilization, OIS) mechanism. However, in an OIS mechanism of a camera module in the conventional technology, wire suspension stabilization or ball bearing stabilization is usually used. In the wire suspension stabilization, a suspension wire is used to support a movable part of the OIS. However, in this structure, the suspension wire plays both supporting and conductive roles, but due to output limitation of the suspension wire, an elastic coefficient cannot be increased, and strength is not high. In a process of long-stroke translational movement, support from the suspension wire sags in a thickness direction. As a result, image stabilization performance is reduced. In the ball bearing stabilization, a plurality of balls are used to support the entire movable part of the OIS. A magnetic attraction force acts on the movable part and a fixed part, to press the balls and maintain a stable structure. However, in this structure, the balls are in contact with a plane. In a large-mass system, a dent on a contact surface may be caused during falling. As a result, image stabilization performance is reduced. Support reliability of the suspension wire and the ball is poor, which is prone to reduction in the image stabilization performance. Consequently, increasingly high photographing and video requirements of a customer in a moving state cannot be met.

To resolve the foregoing technical problems, embodiments of this application provide a camera module 10, which can be mounted in an electronic device, to resolve a problem of poor support reliability of an image stabilization mechanism in the camera module 10 in the conventional technology. The electronic device may be any electronic device that may have a photographing function, such as a mobile phone, a tablet computer, a notebook computer, an artificial intelligence (artificial intelligence, AI) device, a wearable device, or a smart home device. A specific form of the electronic device is not specifically limited in embodiments of this application.

To better understand technical solutions of this application, the following describes embodiments of this application in detail with reference to the accompanying drawings.

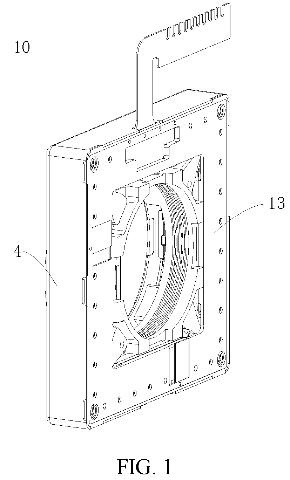

Embodiments of this application provide a camera module 10. As shown in FIG. 1 to FIG. 4, the camera module 10 includes an image stabilization mechanism 1. Along a thickness direction Z of the image stabilization mechanism 1, the image stabilization mechanism 1 includes a first movable frame 11, a second movable frame 12, and a third fixed frame 13 that are sequentially connected. The first movable frame 11 is configured to mount a lens assembly, one of the first movable frame 11 and the second movable frame 12 is provided with a first sliding groove part 111, the other one of the first movable frame 11 and the second movable frame 12 is provided with a first sliding part 121, the first sliding part 121 is capable of sliding along the first sliding groove part 111, and the first sliding groove part 111 extends along a first direction X. One of the second movable frame 12 and the third fixed frame 13 is provided with a second sliding groove part 122, the other one of the second movable frame 12 and the third fixed frame 13 is provided with a second sliding part 131, the second sliding part 131 is capable of sliding along the second sliding groove part 122, and the second sliding groove part 122 extends along a second direction Y.

When shaking, the camera module 10 may cause the lens assembly to shake. Therefore, when the camera module 10 shakes, based on a shaking direction and a displacement amount of the lens assembly, the first movable frame 11 and the second movable frame 12 can drive the lens assembly to move in an opposite direction, to compensate for the shaking direction and the displacement amount of the lens assembly, so that poor imaging caused by shaking of the camera module 10 is effectively overcome, and image stabilization effect of the image stabilization mechanism 1 is implemented.

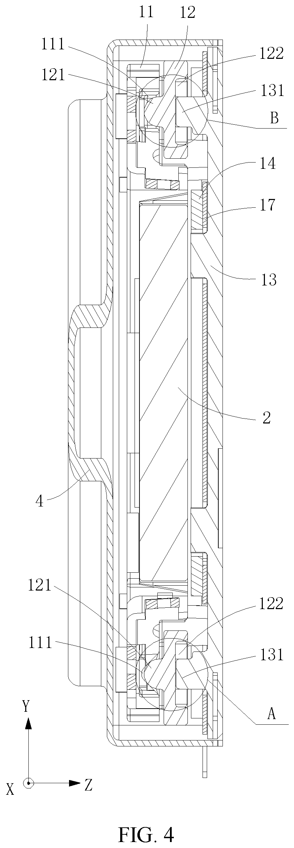

In this embodiment, as shown in FIG. 4 to FIG. 6, the second movable frame 12 and the third fixed frame 13 of the image stabilization mechanism 1 can generate displacement in the second direction Y relative to the third fixed frame 13 through fitting between the second sliding part 131 and the second sliding groove part 122, so that the first movable frame 11 can move as the second movable frame 12 moves along the second direction Y and generate displacement in the second direction Y relative to the third fixed frame 13. For the first movable frame 11 and the second movable frame 12, through fitting between the first sliding part 121 and the first sliding groove part 111, the first movable frame 11 can move relative to the second movable frame 12 and generate displacement in the first direction X. Therefore, the first movable frame 11 can generate the displacement in the first direction X and the second direction Y relative to the third fixed frame 13. The lens assembly is mounted on the first movable frame 11, so that the first movable frame 11 can drive the lens assembly to move along the first direction X or the second direction Y. In addition, when the first movable frame 11 generates motions along the first direction X and the second direction Y simultaneously, the first movable frame 11 can generate a motion in a direction of a resultant force of the motions along the first direction X and the second direction Y and generate combined displacement, so that the lens assembly can be driven to generate displacement in this direction, and an image stabilization function of the camera module 10 is implemented.

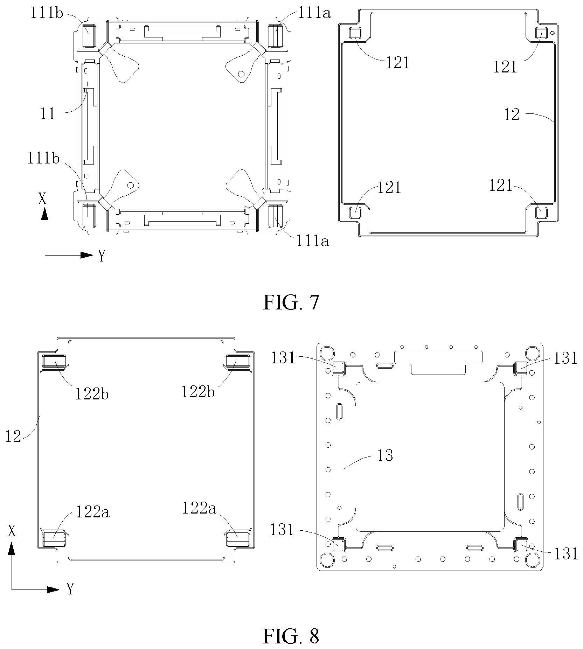

In this embodiment of this application, as shown in FIG. 7 and FIG. 8, the first movable frame 11 of the image stabilization mechanism 1 in the camera module 10 can generate a motion along the first direction X relative to the second movable frame 12, and the second movable frame 12 can generate a motion along the second direction Y relative to the third fixed frame 13, which has double-layer degree-of-freedom decoupling. In this way, motion crosstalk between the first movable frame 11 and the second movable frame 12 is smaller, a tilt angle of movement is reduced, motion accuracy of the first movable frame 11 and the second movable frame 12 can be improved, and the image stabilization effect can be improved. The second movable frame 12 and the third fixed frame 13 slide in a fitting manner through the second sliding part 131 and the second sliding groove part 122, and the first movable frame 11 and the second movable frame 12 slide in a fitting manner through the first sliding part 121 and the first sliding groove part 111. This manner has advantages of a simple structure and low manufacturing costs, and has small motion resistance, a faster corresponding speed, and motion stability. In addition, in this fitting manner, support and limit among the first movable frame 11, the second movable frame 12, and the third fixed frame 13 are more reliable, which are unlikely to sag in the thickness direction Z. Stress on the first sliding groove part 111 and the second sliding groove part 122 is more uniform, support reliability among the first movable frame 11, the second movable frame 12, and a third movable frame 13 is improved, a reduction in image stabilization effect is avoided, and therefore image stabilization reliability of the image stabilization mechanism 1 is improved. Moreover, in this fitting manner, the first sliding groove part 111 and the second sliding groove part 122 can further have larger stroke space, and therefore, the first movable frame 11 and the second movable frame 12 can have a longer movement stroke, so that an image stabilization angle of the image stabilization mechanism 1 is improved, photographing and video requirements of an electronic device during a more violent shake can be met, and user experience is improved.

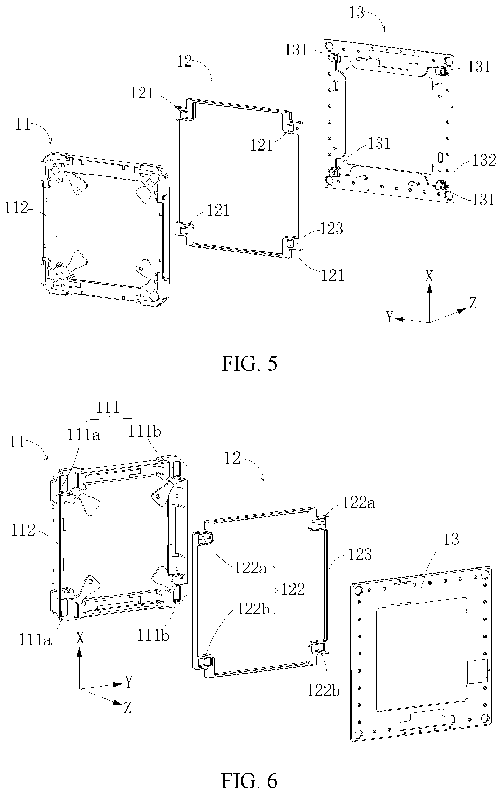

In specific embodiments shown in FIG. 5 to FIG. 8, the first movable frame 11 and the second movable frame 12 slide in a fitting manner through four first sliding parts 121 and four first sliding groove parts 111, and the second movable frame 12 and the third fixed frame 13 slide in a fitting manner through four second sliding parts 131 and four second sliding groove parts 122, which are provided at four corners of the first movable frame 11, the second movable frame 12, and the third fixed frame 13, to improve support stability and motion stability, and avoid interference between another component of the camera module 10 and both the sliding groove part and the sliding part. Certainly, a quantity of sliding parts and sliding groove parts that fit may be adjusted based on a specific structure, for example, six or eight. The sliding part and the sliding groove part may alternatively be correspondingly provided at another position, provided that the sliding part and the sliding groove part can slide in the fitting manner. This is not limited herein.

In addition, as shown in FIG. 1 to FIG. 3, the camera module 10 further includes a housing 4. The third fixed frame 13 is fastened to the housing 4, and encloses accommodating space with the housing 4. Components of the image stabilization mechanism 1, such as the first movable frame 11, the second movable frame 12, a debouncing circuit board assembly 17, are accommodated in the accommodating space. This improves structural stability of the camera module 10, and can further avoid interference between the camera module 10 and another component of the electronic device, to improve image stabilization reliability.

In a specific embodiment, as shown in FIG. 7 and FIG. 8, the first sliding groove part 111 includes a first positioning groove 111a. The first positioning groove 111a is configured to fit with the first sliding part 121 to limit sliding of the first sliding part 121 along the second direction Y. The second sliding groove part 122 includes a second positioning groove 122a. The second positioning groove 122a is configured to fit with the second sliding part 131 to limit sliding of the second sliding part 131 along the first direction X.

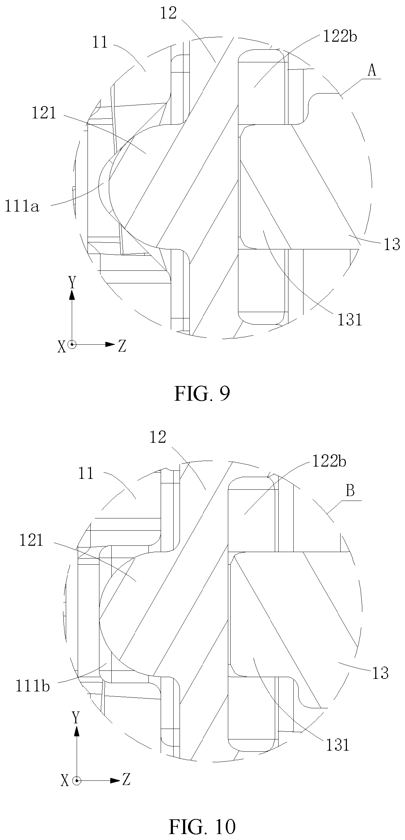

In this embodiment, as shown in FIG. 7 and FIG. 9, the first positioning groove 111a fits with the first sliding part 121, so that the first sliding part 121 can be prevented from sliding in the first positioning groove 111a along the second direction Y, and therefore the first movable frame 11 is prevented from generating displacement in the second direction Y relative to the second movable frame 12. The second positioning groove 122a fits with the second sliding part 131, so that the second sliding part 131 can be prevented from sliding in the second positioning groove 122a along the first direction X, and therefore the second movable frame 12 is prevented from generating displacement in the first direction X relative to the third fixed frame 13. In this way, the first movable frame 11 can generate only displacement in the first direction X relative to the second movable frame 12, and the second movable frame 12 can generate only displacement in the second direction Y relative to the third fixed frame 13, so that motion crosstalk is avoided, a tilt angle of movement is reduced, displacement accuracy of the first movable frame 11 and the second movable frame 12 is improved, and the image stabilization effect of the camera module 10 is improved.

In a specific embodiment, as shown in FIG. 7 to FIG. 9, the first positioning groove 111a and the second positioning groove 122a are V-shaped grooves or trapezoidal grooves.

In this embodiment, as shown in FIG. 7 to FIG. 9, openings of the V-shaped groove and the trapezoidal groove gradually increase along the thickness direction Z. When the first sliding part 121 and the second sliding part 131 are supported with the V-shaped groove or the trapezoidal groove in a fitting manner along the Z direction, the first sliding part 121 and the second sliding part 131 may be located at a position where the opening of the V-shaped groove or the trapezoidal groove is relatively small. In this way, displacement of the first sliding part 121 and the second sliding part 131 along a non-extension direction of the V-shaped groove or the trapezoidal groove can be limited, preventing the first movable frame 11 from generating displacement in a non-preset direction relative to the second movable frame 12 and preventing the second movable frame 12 from generating displacement in a non-preset direction relative to the third fixed frame 13, so that the first sliding part 121 and the second sliding part 131 can be accurately positioned. In addition, structures of the V-shaped groove and the trapezoidal groove are simple, which facilitates mass production, processing, and manufacturing, so that mechanism complexity of the camera module 10 can be further reduced, and manufacturing costs can be reduced.

In the specific embodiment shown in FIG. 7 to FIG. 9, the first positioning groove 111a and the second positioning groove 122a are V-shaped grooves. This can further reduce manufacturing difficulty and improve production efficiency. Certainly, the first positioning groove 111a may alternatively be a V-shaped groove, and the second positioning groove 122a may be a trapezoidal groove, or the first positioning groove 111a and the second positioning groove 122a may alternatively be of other shapes and structures provided that the displacement of the first sliding part 121 and the second sliding part 131 in the non-extension direction can be limited in the first position 111a and the second positioning groove 122a. This is not limited herein.

In a specific embodiment, as shown in FIG. 7, FIG. 8, and FIG. 10, the first sliding groove part 111 further includes a first sliding groove 111b, and the second sliding groove part 122 further includes a second sliding groove 122b. In the second direction Y, a width of the first sliding groove 111b is greater than a width of the first sliding part 121. In the first direction X, a width of the second sliding groove 122b is greater than a width of the second sliding part 131.

In this embodiment, as shown in FIG. 7, FIG. 8, and FIG. 10, when the first movable frame 11, the second movable frame 12, and the third fixed frame 13 are supported and in contact with each other in a fitting manner along the thickness direction Z, in the structure disposition, a fault tolerance rate of the first sliding groove part 111 and the second sliding groove part 122 can be increased, a difficulty of fitting the first sliding groove part 111 with the first sliding part 121 and a difficulty of fitting the second sliding groove part 122 with the second sliding part 131 are reduced, a qualification rate of the camera module 10 is improved, and a manufacturing difficulty and costs are reduced.

In a specific embodiment, as shown in FIG. 7, FIG. 8, and FIG. 10, the first sliding groove 111b and the second sliding groove 122b are square grooves or U-shaped grooves.

In this embodiment, as shown in FIG. 7, FIG. 8, and FIG. 10, opening sizes of the square groove and the U-shaped groove in the thickness direction Z are the same. When the first movable frame 11, the second movable frame 12, and the third fixed frame 13 are supported and in contact with each other in a fitting manner along the thickness direction Z, the square groove or the U-shaped groove and the first sliding part 121 and the second sliding part 131 may implement functions of supporting and limiting only in the thickness direction Z, but do not perform the limiting function in a non-preset moving direction. In this way, it is ensured that the first sliding part 121 and the second sliding part 131 can move smoothly along a preset moving direction, and fault tolerance rates of the first sliding groove part 111 and the second sliding groove part 122 are increased.

In the specific embodiment shown in FIG. 7, FIG. 8, and FIG. 10, the first sliding groove 111b and the second sliding groove 122b are square grooves. This can further reduce the manufacturing difficulty and improve the production efficiency. Certainly, the first sliding groove 111b and the second sliding groove 122b may alternatively be of other structures, provided that the first sliding groove 111b and the second sliding groove 122b can perform a tolerance function. This is not limited herein.

In addition, in a non-extension direction of the sliding groove part, the positioning groove may be disposed on one side of a sliding plane of a frame, and the sliding part may be disposed on the other side of the sliding plane, to ensure tolerance effect. For example, in the embodiment shown in FIG. 7 and FIG. 8, the two first positioning grooves 111a and the two first sliding grooves 111b are sequentially disposed on the first movable frame 11 along the second direction Y, and the two second positioning grooves 122a and the two second sliding grooves 122b are sequentially disposed on the second movable frame 12 along the first direction X.

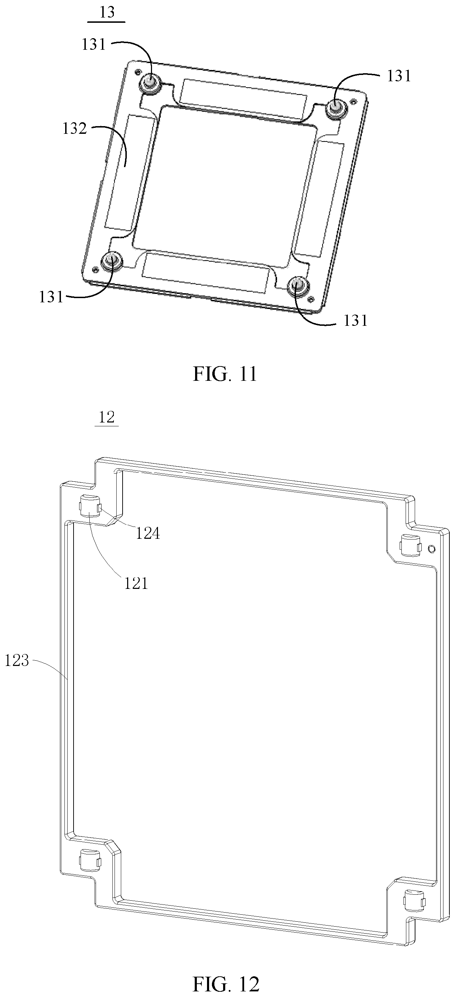

In a specific embodiment, as shown in FIG. 5, FIG. 6, FIG. 10, and FIG. 11, the first sliding part 121 and the second sliding part 131 are of semi-cylindrical structures or hemispherical structures.

In this embodiment, as shown in FIG. 5, FIG. 6, FIG. 10, and FIG. 11, when the first sliding part 121 and the second sliding part 131 are of semi-cylindrical structures or hemispherical structures, contact areas with the first sliding groove part 111 and the second sliding groove part 122 can be reduced, so that a damping force is reduced, and the first sliding part 121 and the second sliding part 131 are more easily driven. Therefore, a faster response speed is obtained, and image stabilization efficiency of the camera module 10 is improved. In addition, a tail end of the semi-cylindrical structure or the hemispherical structure is a smooth curved surface, so that a recess is not easily generated due to stress concentration when the first sliding groove part 111 and the second sliding groove part 122 are in contact. Therefore, the first sliding groove part 111 and the second sliding groove part 122 have better bearing capacity, falling reliability of a camera assembly is improved, and a service life of the camera assembly is improved.

Certainly, the first sliding part 121 and the second sliding part 131 may alternatively be of other structures. This is not limited herein.

In a specific embodiment, as shown in FIG. 4, FIG. 5, FIG. 6, FIG. 9, and FIG. 10, the first movable frame 11, the second movable frame 12, and the third fixed frame 13 are of integrated injection-molded structures.

In this embodiment, as shown in FIG. 4, FIG. 5, FIG. 6, FIG. 9, and FIG. 10, when the first movable frame 11, the second movable frame 12, and the third fixed frame 13 are all of the integrated injection-molded structures, that is, another component is not required for the first movable frame 11, the second movable frame 12, and the third fixed frame 13 for support, constituent components of the camera module 10 can be further reduced, the manufacturing costs are further reduced, and manufacturing efficiency is improved.

In another specific embodiment, as shown in FIG. 5, FIG. 6, and FIG. 12, the first movable frame 11 further includes a first body 112, the second movable frame 12 further includes a second body 123, and the third fixed frame 13 further includes a third body 132. The first sliding part 121 is detachably connected to the first body 112 or the second body 123, and the second sliding part 131 is detachably connected to the second body 123 or the third body 132.

In this embodiment, as shown in FIG. 5, FIG. 6, and FIG. 12, the structure can further improve fit tolerance of the first movable frame 11, the second movable frame 12, and the third fixed frame 13, and positions of the first sliding part 121 and the second sliding part 131 may be adjusted based on an actual structure in a preparation process, so that the first movable frame 11, the second movable frame 12, and the third fixed frame 13 can effectively support and connect to each other in a fitting manner, to improve the manufacturing efficiency of the camera module 10. Moreover, the first sliding part 121 and the second sliding part 131 can be replaced when the first sliding part 121 and the second sliding part 131 are severely worn out, to reduce subsequent maintenance costs. In addition, in the structure disposition, materials of the first sliding part 121 and the second sliding part 131 can be other materials different from those of the first movable frame 11, the second movable frame 12, and the third fixed frame 13, to improve abrasive resistance of the first sliding part 121 and the second sliding part 131, and prolong service lives of the first sliding part 121 and the second sliding part 131.

When materials of the first sliding part 121 and the second sliding part 131 are different from those of the first movable frame 11, the second movable frame 12, and the third fixed frame 13, the first sliding part 121 and the second sliding part 131 may be of cylindrical, semi-cylindrical, spherical, hemispherical structures, or the like made of a material such as stainless steel. This is not limited herein. Certainly, the materials of the first sliding part 121 and the second sliding part 131 may alternatively the same as those of the first movable frame 11, the second movable frame 12, and the third fixed frame 13, to reduce the manufacturing costs. This is not limited herein.

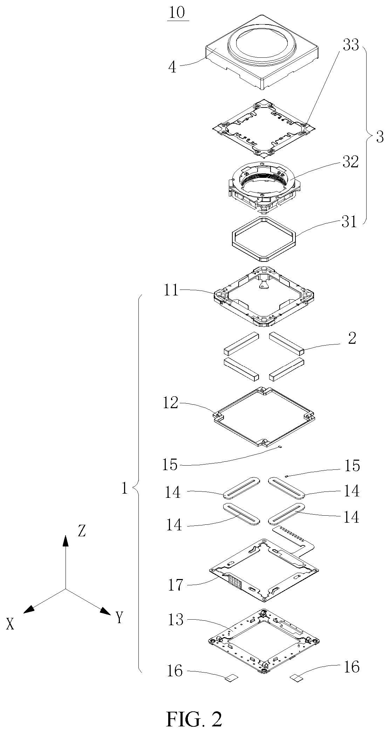

In addition, in an implementation solution, the first sliding part 121 is connected to the first body 112 or the second body 123 through clamping or the like, and the second sliding part 131 may be connected to the second body 123 or the third body 132 through clamping or the like. This is not limited herein. For example, in a specific embodiment shown in FIG. 2, the second movable frame 12 is a structure in which the first sliding part 121 is detachably connected to the second body 123. The second body 123 may be provided with a clamping part 124, so that the first sliding part 121 can be clamped to the clamping part 124, to reduce assembly difficulty of the first sliding part 121. Similarly, the first movable frame 11 and the third fixed frame 13 may also be of this structure, or certainly may be of another combination structure. This is not limited herein.

In another implementation solution, a V-shaped or trapezoidal mounting groove that fits with the first sliding part 121 may be provided on the first body 112 or the second body 123, and the first sliding part 121 is disposed in the mounting groove. In addition, the V-shaped or trapezoidal mounting groove can also accurately locate a position of the first sliding part 121 on the first body 112 or the second body 123, to avoid motion crosstalk. Similarly, fitting between the second sliding part 131 and the second body 123 or the third body 132 may also be disposed in this way. This is not limited herein.

In a specific embodiment, as shown in FIG. 7 and FIG. 8, a lubricating material is disposed inside the first sliding groove part 111 and the second sliding groove part 122. The lubricating material is lubricating grease or lubricating oil.

In this embodiment, as shown in FIG. 7 and FIG. 8, the lubricating material is added to the first sliding groove part 111 and the second sliding groove part 122, so that sliding friction between the first sliding part 121 and the first sliding groove part 111 and between the second sliding part 131 and the second sliding groove part 122 can be further reduced. Therefore, a response speed is improved, power consumption can also be reduced, and control precision of the first movable frame 11 and the second movable frame 12 is improved.

Certainly, the lubricating material may alternatively be another lubricating material such as graphite. This is not limited herein.

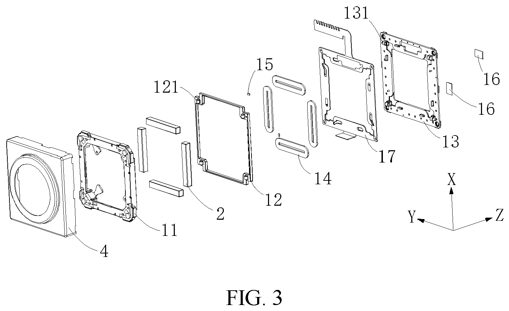

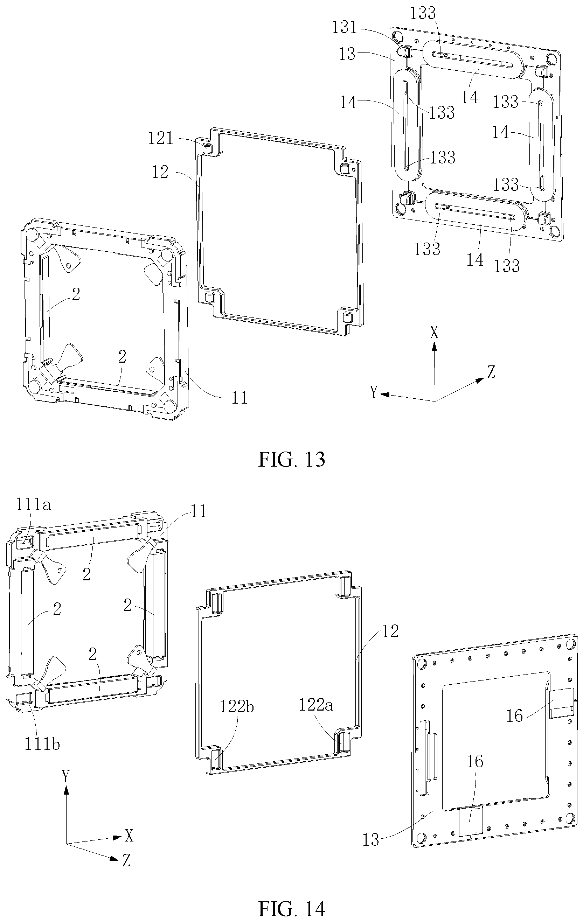

In a specific embodiment, as shown in FIG. 3 and FIG. 13, the camera module 10 further includes a magnet 2, and the image stabilization mechanism 1 further includes an image stabilization coil 14. The image stabilization coil 14 is configured to drive the magnet 2 to move along the first direction X or the second direction Y. The magnet 2 is fastened to the first movable frame 11, the image stabilization coil 14 is fastened to the third fixed frame 13, and the image stabilization coil 14 is disposed in correspondence with the magnet 2.

In this embodiment, as shown in FIG. 3 and FIG. 13, when the image stabilization mechanism 1 of the camera module 10 operates, the coil 14 can be powered on to generate a magnetic flux, to control the magnet 2 to move, so that the magnet 2 can drive the first movable frame 11 to generate corresponding displacement. Therefore, the structure can provide a driving force for the image stabilization mechanism 1, so that the first movable frame 11 and the second movable frame 12 of the image stabilization mechanism 1 can slide based on the shaking direction and the displacement amount of the lens assembly, to compensate for the shaking direction and the displacement amount of the lens assembly and therefore implement the image stabilization function.

As shown in FIG. 13 and FIG. 14, a plurality of protrusions 133 may be provided on the third fixed frame 13, to facilitate positioning, fastening, and mounting of the coil 14. A recess part may be provided on the first movable frame 11, to facilitate fastening and mounting of the magnet 2. In this way, the magnet 2 and the coil 14 are prevented from generating displacement during shaking or falling, and the structural stability and the falling reliability of the camera module 10 are improved.

In addition, as shown in FIG. 2 and FIG. 3, the debouncing circuit board assembly 17 is mounted on the third fixed frame 13, so that the electronic device can supply power to the image stabilization coil 14 through the debouncing circuit board assembly 17, to implement the image stabilization function of the image stabilization mechanism 1.

In a specific embodiment, as shown in FIG. 3 and FIG. 14, the image stabilization mechanism 1 further includes a magnetic sheet 16. The magnetic sheet 16 is fastened to a side that is of the third fixed frame 13 and that is away from the second movable frame 12. The magnetic sheet 16 and the magnet 2 can be attracted to each other, to press the third fixed frame 13 to the first movable frame 11.

In this embodiment, as shown in FIG. 3 and FIG. 14, the magnetic sheet 16 and the magnet 2 can be attracted to each other, so that the third fixed frame 13 is pressed to the first movable frame 11, so that the first movable frame 11, the second movable frame 12, and the third fixed frame 13 are more closely in contact with and fit with each other in the thickness direction Z, the structure is more stable and is difficult to separate. Therefore, the structural stability of the camera module 10 is improved.

As shown in FIG. 3 and FIG. 14, two magnetic sheets 16 are disposed to reduce interference of the magnetic sheet 14 to another camera element while improving structural stability. Certainly, there may be three or four magnetic sheets 16, which may be disposed based on a specific structure. This is not limited herein.

In a specific embodiment, as shown in FIG. 3, FIG. 14, and FIG. 15, the image stabilization mechanism 1 further includes a position detection sensor 15. Position detection is disposed on the third fixed frame 13, and is configured to detect a magnetic field change of the magnet 2, to feed back positions of the first movable frame 11 and the second movable frame 12. The position detection sensor 15 is a Hall element or a tunnel magnetoresistance sensor.

In this embodiment, as shown in FIG. 3, FIG. 14, and FIG. 15, the position detection sensor 15 can detect a magnetic field, and determine a moving position of the magnet 2 by detecting the magnetic field change of the magnet 2, to determine moving positions of the first movable frame 11 and the second movable frame 12, and feed back real-time position changes of the first movable frame 11 and the second movable frame 12, so that the camera module 10 can control a current magnitude of the coil 14 based on the real-time position changes of the first movable frame 11 and the second movable frame 12. In this way, close-loop control of the positions of the first movable frame 11 and the second movable frame 12 is performed by driving the magnet 2, and the control precision of the first movable frame 11 and the second movable frame 12 is further improved.

Both the Hall element and the tunnel magnetoresistance sensor can detect the magnetic field, and have advantages of a simple structure, a small size, a fast feedback speed, and low costs. When the position detection sensor 15 is the Hall element or the tunnel magnetoresistance sensor, occupied space of the position detection sensor 15 in the camera module 10 can be reduced. This facilitates compact design of the camera module 10.

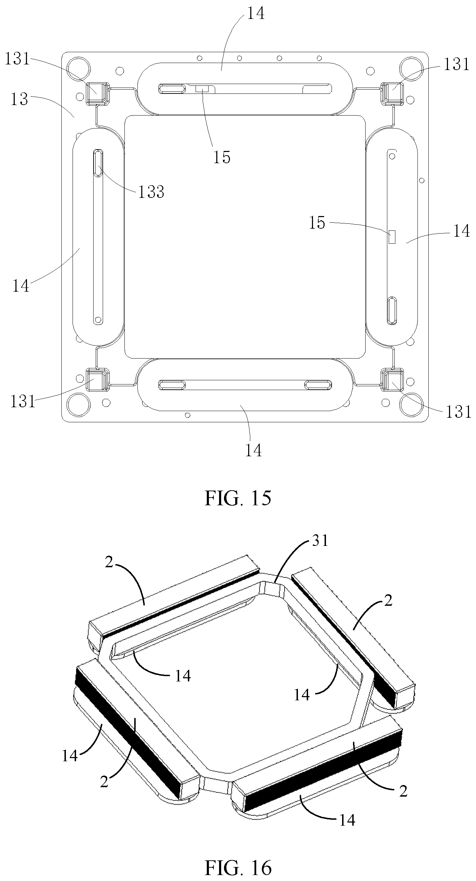

In addition, as shown in FIG. 15, the position detection sensor 15 may be disposed near the coil 14, to improve detection efficiency of the position detection sensor 15. Moreover, two position detection sensors 15 may be disposed to detect a motion along the first direction X and the second direction Y respectively, to improve detection precision.

In a specific embodiment, as shown in FIG. 1 and FIG. 2, the camera module 10 further includes an autofocus mechanism 3. The autofocus mechanism 3 is configured to implement autofocus of the camera module 10. The autofocus mechanism 3 is disposed on a side that is of the first movable frame 11 and that is away from the second movable frame 12.

In this embodiment, as shown in FIG. 1 and FIG. 2, the autofocus mechanism 3 is disposed, so that the camera module 10 can implement autofocus while implementing image stabilization. Therefore, photographing effect of the electronic device in a plurality of motion modes is ensured, and user experience is improved.

The camera module 10 further includes a lens bracket 32. The lens bracket 32 is mounted on the first movable frame 11, and the lens assembly is mounted on the first movable frame 11 through the lens bracket 32.

In a specific embodiment, as shown in FIG. 2, FIG. 16, and FIG. 17, the autofocus mechanism 3 includes a focus coil 31. The focus coil 31 is disposed on an inner side of the magnet 2, and the focus coil 31 is an integrated annular coil or is formed by combining a plurality of coils.

In this embodiment, as shown in FIG. 2, when the autofocus mechanism 3 operates, the focus coil 31 is powered on to generate a magnetic flux, which acts with the magnet 2, to drive the autofocus mechanism 3 to implement an autofocus function.

The focus coil 31 is sleeved on the lens bracket 32, so that the focus coil 31 can drive the lens bracket 32 to drive the lens assembly to move, to implement autofocus.

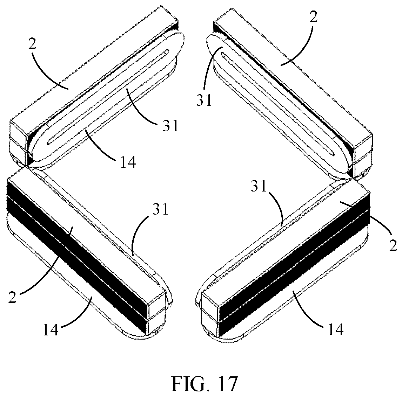

Based on a specific structure and a usage scenario of the camera module 10, as shown in FIG. 16 and FIG. 17, the magnet 2, the focus coil 31, and the image stabilization coil 14 may be in different layouts. In a specific embodiment shown in FIG. 16, there are four magnets 2. The magnet 2 uses a single-sided monopole configuration, the focus coil 31 is the integrated annular coil disposed on the inner side of the magnet 2, and the image stabilization coil 14 is disposed at a bottom of the magnet 2. The structure has advantages of a simple structure, a small quantity of components, and high structural compactness. This facilitates compact design of the electronic device and the camera module 10. In another specific embodiment shown in FIG. 17, there are eight magnets 2. The magnet uses a single-sided bipolar configuration, the focus coil 31 is formed by using a combination of four coils and is disposed on the inner side of the magnet 2, and the image stabilization coil 14 is disposed at a bottom of the magnet 2. In this structure, current control may be separately performed on the four coils that form the focus coil 31, so that control is more precise and control precision is improved.

Certainly, the magnet 2, the focus coil 31, and the image stabilization coil 14 may alternatively be in another layout. This is not limited herein.

In addition, the autofocus mechanism 3 further includes a focusing circuit board assembly 33, so that the electronic device can supply power to the focus coil 31 through the focusing circuit board assembly 33, to implement the autofocus function of the electronic device.

Embodiments of this application further provide an electronic device, including a housing and the camera module 10 in any one of the foregoing embodiments. The camera module 10 is mounted in the housing. Because the camera module 10 has the foregoing technical effect, the electronic device including the camera module 10 also has corresponding technical effect. Details are not described herein again.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A camera module, comprising an image stabilization mechanism, wherein along a thickness direction of the image stabilization mechanism, the image stabilization mechanism comprises a first movable frame, a second movable frame, and a third fixed frame that are sequentially connected;
the first movable frame is configured to mount a lens assembly, one of the first movable frame and the second movable frame is provided with a first sliding groove part, the other one of the first movable frame and the second movable frame is provided with a first sliding part, the first sliding part is capable of sliding along the first sliding groove part, and the first sliding groove part extends along a first direction; and
one of the second movable frame and the third fixed frame is provided with a second sliding groove part, the other one of the second movable frame and the third fixed frame is provided with a second sliding part, the second sliding part is capable of sliding along the second sliding groove part, and the second sliding groove part extends along a second direction.

2. The camera module according to claim 1, wherein the first sliding groove part comprises a first positioning groove, and the first positioning groove is configured to fit with the first sliding part to limit sliding of the first sliding part along the second direction; and
the second sliding groove part comprises a second positioning groove, and the second positioning groove is configured to fit with the second sliding part to limit sliding of the second sliding part along the first direction.

3. The camera module according to claim 2, wherein the first positioning groove and the second positioning groove are V-shaped grooves or trapezoidal grooves.

4. The camera module according to claim 1, wherein the first sliding groove part further comprises a first sliding groove, and the second sliding groove part further comprises a second sliding groove;
along the second direction, a width of the first sliding groove is greater than a width of the first sliding part; and
along the first direction, a width of the second sliding groove is greater than a width of the second sliding part.

5. The camera module according to claim 4, wherein the first sliding groove and the second sliding groove are square grooves or U-shaped grooves.

6. The camera module according to claim 1, wherein the first sliding part and the second sliding part are of semi-cylindrical structures or hemispherical structures.

7. The camera module according to claim 6, wherein the first movable frame, the second movable frame, and the third fixed frame are all of integrated injection-molded structures.

8. The camera module according to claim 6, wherein the first movable frame further comprises a first body, the second movable frame further comprises a second body, and the third fixed frame further comprises a third body;
the first sliding part is detachably connected to the first body or the second body; and
the second sliding part is detachably connected to the second body or the third body.

9. The camera module according to any one of claims 1 to 8, wherein a lubricating material is disposed inside the first sliding groove part and the second sliding groove part; and
the lubricating material is lubricating grease or lubricating oil.

10. The camera module according to any one of claims 1 to 8, wherein the camera module further comprises a magnet, the image stabilization mechanism further comprises an image stabilization coil, and the image stabilization coil is configured to drive the magnet to move along the first direction or the second direction; and
the magnet is fastened to the first movable frame, the image stabilization coil is fastened to the third fixed frame, and the image stabilization coil and the magnet are disposed in correspondence.

11. The camera module according to claim 10, wherein the image stabilization mechanism further comprises a magnetic sheet, and the magnetic sheet is fastened to a side that is of the third fixed frame and that is away from the second movable frame; and
the magnetic sheet and the magnet are capable of attracting each other, to press the third fixed frame to the first movable frame.

12. The camera module according to claim 10, wherein the image stabilization mechanism further comprises a position detection sensor, and the position detection is disposed on the third fixed frame, and is configured to detect a magnetic field change of the magnet, to feed back positions of the first movable frame and the second movable frame; and
the position detection sensor is a Hall element or a tunnel magnetoresistance sensor.

13. The camera module according to claim 10, wherein the camera module further comprises an autofocus mechanism, and the autofocus mechanism is configured to implement autofocus of the camera module; and
the autofocus mechanism is disposed on a side that is of the first movable frame and that is away from the second movable frame.

14. The camera module according to claim 13, wherein the autofocus mechanism comprises a focus coil, and the focus coil is disposed on an inner side of the magnet; and
the focus coil is an integrated annular coil or is formed by combining a plurality of coils.

15. An electronic device, comprising a housing and the camera module according to any one of claims 1 to 14, wherein the camera module is mounted in the housing.
